Europäisches Patentamt

European Patent Office

Office européen des brevets

(19)

(11) Veröffentlichungsnummer : **0 087 101**
**B1**

(12) EUROPÄISCHE PATENTSCHRIFT

(45) Veröffentlichungstag der Patentschrift :
27.07.88

(51) Int. Cl.⁴ : **G 02 B  5/30**

(21) Anmeldenummer : 83101405.5

(22) Anmeldetag : 14.02.83

(54) Reflexionsfreier optischer Polarisator mit einem Prisma.

(30) Priorität : 19.02.82 DE 3206040

(43) Veröffentlichungstag der Anmeldung :
31.08.83 Patentblatt 83/35

(45) Bekanntmachung des Hinweises auf die Patenterteilung : 27.07.88 Patentblatt 88/30

(84) Benannte Vertragsstaaten :
AT BE CH DE FR GB IT LI LU NL SE

(56) Entgegenhaltungen :
EP-A- 0 075 107
FR-A- 2 246 882
US-A- 3 612 652
US-A- 3 998 524

(73) Patentinhaber : Siemens Aktiengesellschaft Berlin
und München
Wittelsbacherplatz 2
D-8000 München 2 (DE)

(72) Erfinder : Mathyssek, Konrad, Dr.-Ing., Dipl.-Ing.
Herzog-Tassilo-Ring 28
D-8011 Zorneding (DE)
Erfinder : Mahlein, Hans, Dr. rer.nat., Dipl.-Phys.
Queristrasse 2
D-8025 Unterhaching (DE)

**Beschreibung**

Die Erfindung betrifft einen reflexionsfreien optischen Polarisator mit einem Prisma für einen optischen Isolator nach dem Oberbegriff des Patentanspruchs 1.

Ein Polarisator der genannten Art geht aus der US-A-3 612 652 (siehe dort insbesondere Fig. 3 und zugehörige Beschreibung) hervor. Bei diesem bekannten Polarisator sind der einfallende Strahl und der ausfallende Strahl in verschiedenen Richtungen auszurichten. Außerdem muß an eine Fläche des Prismas, an der Totalreflexion auftritt, eine doppelbrechende Platte angrenzen, die bewirkt, daß polarisierendes Licht mit einer von zwei zueinander orthogonalen Polarisationsrichtungen ungebrochen durch die Fläche hindurchtritt, an der das Licht mit der anderen Polarisationsrichtung total reflektiert wird. Außerdem tritt der einfallende Strahl, der im Prisma total reflektiert wird, in der gleichen Höhe aus dem Prisma aus, in der er eingetreten ist.

Optische Isolatoren sind in der optischen Nachrichtentechnik erforderlich, um an Steckern, Spleißen und sonstigen Störstellen verursachte Rückreflexionen des optischen Leitungsflusses in eine Laserdiode eines Sendeteils zu unterdrücken. Solche Isolatoren sind nichtreziproke optische Bauelemente. Experimente haben gezeigt, daß auch bei einer Pegeldifferenz von 40 dB zwischen ausgesandter und rückreflektierter Strahlungsleistung die Stabilität der Laseremission noch gestört werden kann.

Für eine möglichst rückwirkungsfreie Funktion der Laserdiode muß folglich die Sperrwirkung des optischen Isolators hoch sein. Ein bekannter derartiger optischer Isolator besteht üblicherweise aus einem Faraday-Dreher, der zwischen zwei unter 45° gekreuzten Polarisatoren angeordnet ist (siehe K. Kobayashi, M. Seki, IEEE Journal of Quantum Electronics QE-16 (1980) seiten 11 bis 22. Aus der geforderten hohen Sperrwirkung eines derartigen Isolators folgt, daß der der Laserdiode zugewandte Polarisator erstens keine Rückreflexionen verursachen darf und zweitens einen hohen Polarisationsgrad aufweisen muß.

Es ist bereits vorgeschlagen worden, als eingangsseitigen optischen Polarisator für einen optischen Isolator einen Polarisator mit einem Prisma zu verwenden. Ein derartiger Polarisator ist nach Art eines Polarisationsstrahlteilers (siehe H. F. Mahlein, W. Rauscher, Optik 38, 1973, S. 387) aufgebaut und besteht aus zwei Prismen, die durch eine dielektrische Vielfachschicht voneinander getrennt sind. Bei diesem Polarisator treten der oder die zueinander orthogonal polarisierten ausfallenden Strahlen in gegenüber der Höhe des einfallenden Strahls verschiedenen Höhen sowie in verschiedenen Richtungen zueinander und zum einfallenden Strahl aus.

Aufgabe der Erfindung ist es, einen Polarisator der eingangs genannten Art anzugeben, bei dem der einfallende und ausfallende Strahl nicht nur in der gleichen Höhe in das Prisma ein- und aus diesem austreten, sondern auch gleichgerichtet sein können und bei dem keine doppelbrechende Platte an der Prismenfläche erforderlich ist, an der Totalreflexion auftritt.

Diese Aufgabe wird durch die im kennzeichnenden Teil des Patentanspruchs 1 angegebenen Merkmale gelöst.

Der erfindungsgemäße Polarisator hat den Vorteil, daß bei ihm ein Strahl beim Durchgang durch das Prisma weitgehend frei von Parallelversatz und/oder Astigmatismus gehalten werden kann.

Der erfindungsgemäße Polarisator ist so im Strahl anzuordnen, daß dieser unter dem Brewster-Winkel auf die Eintrittsfläche des Prismas einfällt. Das Prisma wirkt in diesem Fall als reflexionsfreier Polarisator, der die einfallende Strahlung in der Einfallsebene polarisiert und der Strahl breitet sich nach dem Austritt aus dem Prisma in der gleichen Richtung aus wie vor Eintritt in das Prisma. Durch die Totalreflexion im Prisma kann zugleich erreicht werden, daß der Strahl auf der gleichen Höhe aus dem Prisma austritt, in der er in das Prisma eintritt, wobei zugleich die Astigmatismusfreiheit erreicht werden kann.

Die dielektrische Vielfachschicht des erfindungsgemäßen Polarisators erhöht den Polarisationsgrad erheblich.

Der Polarisator läßt sich relativ zur Lichtquelle und zum Faraday-Dreher des Isolators einfacher justieren, wenn der Strahl beim Durchgang durch den Polarisator weder einen Parallelversatz noch einen Astigmatismus aufweist, und die Lichteinkopplung in die auf den Isolator folgende Glasfaser läßt sich dadurch auch verbessern.

In einer besonders bevorzugten Ausführungsform eines derartigen Polarisators ist das Prisma gemäß Anspruch 2 ein Dove-Prisma, das an sich bekannt ist (siehe E. Hecht und A. Zajac, Optics, Addison-Wesley Public Co. 1974).

Weitere bevorzugte und vorteilhafte Ausführungsformen eines Polarisators mit polarisierender Vielfachschicht sowie eine zweckmäßige Ausgestaltung eines erfindungsgemäßen Polarisators gehen aus den weiteren Unteransprüchen hervor.

Ein Ausführungsbeispiel der Erfindung wird anhand der Figuren in der folgenden Beschreibung näher erläutert. Von den Figuren zeigen :

Figur 1 einen Polarisator in Form eines einzelnen Dove-Prismas, dessen Ein- und Austrittsflächen entsprechend schwarz abgedeckt sind, der keine Vielfachschicht aufweist.

Figur 2 einen Polarisators in Form zweier in Strahlrichtung hintereinander angeordneter Dove-Prismen, die durch eine polarisierende Vielfachschicht voneinander getrennt sind.

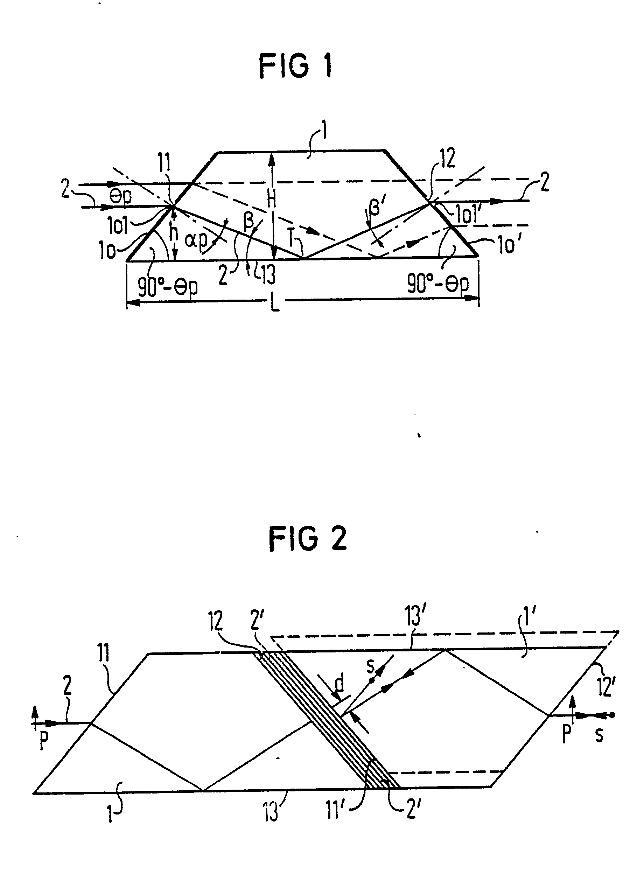

Der in Figur 1 dargestellte rückwirkungsfreie Polarisator besteht aus dem in Seitenansicht gezeigten Dove-Prisma 1 mit den in Seitenflächen 11 und 12 und der Basisfläche 13. Die beiden Seitenflächen 11 und 12 sind in einem Winkel von $90° - \theta_p$ zur Basisfläche 13 und zu deren Mitte hin geneigt. Eine der beiden Seitenflächen, beispielsweise die Seitenfläche 11 bildet eine brechende Eintrittsfläche und die andere Seitenfläche 12 eine brechende Austrittsfläche des Prismas.

Das Dove-Prisma 1 wirkt bekanntlich so, daß ein Strahl 2, der unter dem zum Lot der Eintrittsfläche 11 gemessenen Winkel $\theta_p$ und damit aus einer zur Basisfläche 13 parallelen Richtung auf die Eintrittsfläche 11 einfällt, in Richtung Basisfläche 13 gebrochen, von dort in Richtung Austrittsfläche 12 reflektiert und an dieser Fläche 12 so gebrochen wird, daß er sich in der gleichen Richtung ausbreitet, wie vor dem Eintritt in das Prisma.

Wird die von der Basisfläche 13 gemessene Einfallshöhe h des Strahls 2 so gewählt, daß die Stelle T, an welcher die Reflexion an der Basisfläche 13 stattfindet, die Länge dieser Fläche halbiert, so tritt der Strahl in der gleichen Höhe aus, in der er eingetreten ist. Das bedeutet, daß der eintretende und austretende Strahl keinen Parallelversatz zueinander aufweisen und daß ein sonst vorhandener Astigmatismus nicht zum Tragen kommt.

Um zu gewährleisten, daß Licht nur in der richtigen Einfallshöhe h eintritt, bei welcher weder Parallelversatz noch Astigmatismus auftreten, wird die Eintrittsfläche 11, zweckmäßigerweise auch die Austrittsfläche 12 mit einer Maske 10 bzw. 10' abgedeckt, die in der Einfallshöhe h ein Fenster in Fom eines schmalen Streifens aufweist, dessen Breite beispielsweise dem Durchmesser eines Laserstrahldurchmessers entsprechend gewählt wird.

Der Neigungswinkel $90° — \theta_p$, unter dem die Eintrittsfläche 11 und die Austrittsfläche 12 zur Basisfläche 13 geneigt sind, ist so gewählt, daß der Einfallswinkel $\theta_p$ des Strahls 2 gleich dem Brewster-Winkel ist. Dadurch wird in dem Strahl 2 enthaltenes, in der Einfallsebene und in der Darstellung gemäß Figur 1 damit in der Zeichenebene schwingendes linear polarisiertes Licht (p-Licht) an der Eintrittsfläche 11 reflexionsfrei gebrochen.

Ein Prisma mit den vorstehend beschriebenen Eigenschaften läßt sich durch folgende Beziehungen berechnen :

$$L = H(1/\tan 90° — \theta_p) + 1/\tan \beta')$$

$$\theta_p = \arctan n_p$$

$$\beta' = \theta_p — \alpha p$$

$$\alpha p = \arcsin [(n_i/n_p) \sin \theta_p] .$$

In diesen Beziehungen bedeuten L die Länge des Prismas, H die Höhe des Prismas, $n_p$ den Brechungsindex des Prismenmaterials und $n_i$ den Brechungsindex des Mediums, welches das Prisma umgibt bzw. an die Eintrittsfläche 11 und die Austrittsfläche 12 angrenzt, $\alpha p$ den Ausfallswinkel des von außen unter dem Einfallswinkel $\theta_p$ auf die Eintrittsfläche 11 des Prismas 1 auftreffenden, dort gebrochenen und im Prisma 1 sich ausbreitenden Strahls 2, und $\beta'$ den Einfallswinkel des im Prisma 1 sich ausbreitenden und auf die Austrittsfläche 12 treffenden Strahls 2, der dort dann gebrochen aus dem Prisma 1 austritt.

Für ein Prisma aus Quarzglas mit $n_p = 1,46$ und für Luft ($n_i = 1$) als äußeres Medium trifft der an der Eintrittsfläche 11 gebrochene Strahl 2 unter einem Einfallswinkel $90° — \beta' = 67,4°$ auf die Basisfläche 13 auf. Dieser Winkel ist größer als der Winkel für Totalreflexion, der in diesem Fall 41,8° beträgt. Bei einer gewählten Prismenhöhe von $H = 2$ mm ergibt sich für die Prismenlänge ein Wert von $L = 6$ mm. Die Einfallshöhe $h = H/2$ zu wählen.

Da wegen der symmetrischen Bauform des Prismas die Brewster-Bedingung auch an der Austrittsfläche 12 erfüllt ist, verläßt der in der Einfallsebene linear polarisierte Strahl 2 das Prisma 1, ohne eine Rückreflexion erlitten zu haben. Der Wegfall des Parallelversatzes zwischen dem eintretenden und austretenden Strahl vereinfacht die Justierung der übrigen optischen Komponenten zueinander.

Einen rückwirkungsfreien Polarisator mit hohem Polarisationsgrad gemäß der Erfindung erhält man mit Hilfe einer dielektrischen Vielfachschicht, insbesondere durch die Kombination zweier Dove-Prismen mit eingeschlossener Vielfachschicht, wie sie aus der Figur 2 hervorgeht.

In dieser Ausführungsform ist die dielektrische Vielfachschicht 2' auf die Austrittsfläche 12 des Dove-Prismas 1 aufgebracht. Auf die Vielfachschicht 2' ist ein zweites Dove-Prisma 1' aufgekittet, dessen Brechungsindex dem des Dove-Prismas 1 entspricht.

Die dielektrische Vielfachschicht 2' weist abwechselnd niedriger und höher brechende Schichten auf. Die Schichtmaterialien werden so gewählt, daß eine niedriger brechende Schicht etwa den Brechungsindex des Prismas aufweist und der Brechungsindex einer höher brechenden Schicht einen solchen Wert aufweist, daß ein unter dem Brewster-Winkel auf die Eintrittsfläche 11 des Prismas einfallender Strahl unter einem Winkel auf eine höher brechende Schicht auftrifft, der dem durch den Brechungsindex dieser höher brechenden Schicht und dem Brechungsindex des Prismas oder der niedriger brechenden Schicht bestimmten Brewster-Winkel entspricht.

Die Schichtdicke der höher brechenden Schichten und die Schichtdicke der niedriger brechenden Schichten werden so gewählt, daß ihre effektiven optischen Schichtdicken gleich einem Viertel der Wellenlänge des einfallenden Strahls 2 sind.

Formeln für die Berechung einer solchen Vielfachschicht lassen sich aus Optik 38 (1973) S. 187 ableiten und sind bspw. in DE-A-3 137 442 angegeben.

Die dielektrische Vielfachschicht 2 des Polarisators nach Figur 2 bewirkt allerdings einen geringfügigen Strahlversatz und eine geringfügige astigmatische Differenz. Berechnet man diese Größen für eine bereits in der genannten älteren Patentanmeldung dimensionierte und auch bei dem vorliegenden Polarisator nach Figur 2 verwendbare Vielfachschicht aus dreizehn alternierenden Schichten für eine mittlere Wellenlänge $\lambda_0 = 800$ nm, so ergeben sich unter Berücksichtigung einer Kittschichtdicke von 5 µm für den Parallelversatz d des Strahles d = 2,5 µm und die astigmatische Differenz $d_a$ zu $d_a = 1,4$ µm. Diese Größen sind so klein, daß sie bei der praktischen Herstellung eines Polarisators nach Figur 2, der für eine Multimodefaserstrecke eingesetzt werden soll, nicht berücksichtigt zu werden brauchen. Durch Versatz der beiden Prismen 1 und 1' können die genannten Größen erforderlichenfalls verringert oder ausgeglichen werden. Ein solcher Prismenversatz ist in der Figur 2 stark übertrieben durch Strichlierung dargestellt.

Der Polarisator nach Figur 2 weist einen sehr hohen Polarisationsgrad auf. Wird ein Polarisator mit lediglich geringem Polarisationsgrad benötigt, so kann ein einzelnes Dove-Prisma ohne Vielfachschicht, also ein Prisma nach Figur 1 benutzt werden. Die Schwächung des zur Einfallsebene senkrecht polarisierten Lichtes (s-Licht) an den Eintrittsflächen 11 und 12 beträgt jeweils ca. 15 %.

Es ist leicht einsichtig, daß ein Dove-Prisma gemäß Figur 1 einem dünnen planparallelen Plättchen, welches zum Laserstrahl unter dem Brewster-Winkel positioniert wird, bezüglich des Polarisationsverhaltens äquivalent ist. Bei näherer quantitativer Betrachtung werden aber zwei Nachteile eines solchen Plättchens deutlich, nämlich der nicht vernachlässigbare Astigmatismus und der große Parallelversatz. Nimmt man ein für diesen Zweck kommerziell verfügbares Quarzglasplättchen mit einer Dicke von 150 µm und einem Brechungsindex von 1,46 an, so ergeben sich ein Parallelversatz d = 0,5 mm und eine astigmatische Differenz $d_a = 66$ µm. Diese Werte sind nicht klein genug, um vernachlässigt werden zu können.

Durch zwei gegensinnig unter dem Brewster-Winkel geneigte planparallele Platten lassen sich zwar in bekannter Weise der Parallelversatz d und der Astigmatismus kompensieren ; diese Anordnung ist jedoch von der Justierung her aufwendig.

**Patentansprüche**

1. Reflexionsfreier optischer Polarisator mit einem Prisma für einen optischen Isolator, wobei das Prisma so gestaltet ist, daß ein unter einem dem Brewster-Winkel entsprechenden Einfallswinkel ($\theta_p$) auf eine Eintrittsfläche (11) des Prismas (1) einfallender und im Prisma (1) mit Totalreflexion verlaufender Strahl (2) unter einem Winkel ($\beta'$) auf eine Austrittsfläche (12) des Prismas (1) trifft, der im wesentlichen gleich dem Brechungswinkel ($\alpha_p$) an der Eintrittsfläche (11) ist (Prisma mit Totalreflexion und Winkelkonstanz unter Brewster-Bedingung), dadurch gekennzeichnet, daß die Ein- und Austrittsfläche (11, 12) relativ zu der einen oder den mehreren parallelen Totalreflexionsflächen (13, 13') des Prismas (1) jeweils in einem Winkel geneigt sind, der betragsmäßig gleich einem Winkel von 90° abzüglich des Brewster-Winkels ist, und daß auf der Austrittsfläche (12) oder auch Eintrittsfläche (11) des Prismas (1) eine dielektrische Vielfachschicht (2') mit abwechselnd niedriger und höher brechenden oder höher und niedriger brechenden Schichten aufgebracht ist, bei welcher der Brechungsindex einer niedriger brechenden Schicht etwa dem Brechungsindex des Prismas (1) entspricht, und bei welcher der Brechungsindex einer höher brechenden Schicht so gewählt ist, daß ein unter dem Brewster-Winkel auf die Eintrittsfläche (11) des Prismas, bzw. auf eine äußere, auf der vom Prisma abgekehrten Seite der Vielfachschicht liegende, niedriger brechende Schicht einfallender Strahl unter einem Winkel auf eine höher brechende Schicht einfällt, der dem durch den Brechungsindex dieser höherbrechenden Schicht und den Brechungsindex des Prismas oder der niedriger brechenden Schicht bestimmten Brewster-Winkel entspricht.

2. Polarisator nach Anspruch 1, dadurch gekennzeichnet, daß das Prisma (1) ein Dove-Prisma ist.

3. Polarisator nach Anspruch 1 oder 2, dadurch gekennzeichnet, daß zumindest die äußere Schicht der Vielfachschicht (2'), die auf der von dem Prisma (1) abgewandten Seite liegt, eine niedriger brechende Schicht ist.

4. Polarisator nach einem der vorhergehenden Ansprüche, dadurch gekennzeichnet, daß auf der von dem Prisma (1) abgewandten Seite (1) der Vielfachschicht (2') ein zweites Prisma (1') mit Totalreflexion und Winkelkonstanz unter Brewster-Bedingung angeordnet ist, das mit seiner Eintrittsfläche (11') und die Vielfachschicht (2') grenzt und dessen Brechungsindex etwa dem des einen Prismas (1) entspricht.

5. Polarisator nach Anspruch 4, dadurch gekennzeichnet, daß die beiden Prismen (1, 1') jeweils Dove-Prismen sind.

6. Polarisator nach einem der vorhergehenden Ansprüche, dadurch gekennzeichnet, daß ein Prisma (1' oder auch 1) mit der Vielfachschicht (2') durch eine Kittschicht verbunden ist, deren Brechungsindex etwa dem des Prismas entspricht.

7. Polarisator nach einem der vorhergehenden Ansprüche, dadurch gekennzeichnet, daß eine brechende Eintrittsfläche (11) des Polarisators, durch welche ein Strahl in den Polarisator eintritt oder auch eine brechende Austrittsfläche (12 oder 12') des Polarisators, durch welche der im Polarisator verlaufende Strahl wieder aus diesem austritt, durch eine strahlungsundurchlässige Maske (10, 10') abgedeckt ist, die in Höhe des einfallenden bzw. austretenden Strahls ein Fenster (101, 101') aufweist.

8. Anwendung eines Polarisators nach einem der vorhergehenden Ansprüche, für einen optischen Isolator zur rückwirkungsfreien optischen Nachrichtenübertragung über Glasfasern oder andere optische Wellenleiter.

# Claims

1. A reflection-free, optical polariser comprising a prism for an optical insulator, where the prism is designed to be such that a beam (2) which strikes an input end face (11) of the prism (1) at an angle of incidence $(\theta_p)$ corresponding to the Brewster angle and which passes through the prism (1) with total internal reflection strikes an output end face (12) of the prism (1) at an angle $(\beta')$ which is fundamentally equal to the angle of refraction $(\alpha_p)$ at the input end face (11) (prism with total internal reflection and angular constancy under the Brewster condition), characterised in that the input end face and output end face (11, 12) are each inclined, relative to the one or more parallel total internal reflection surfaces (13, 13') of the prism (1), at an angle which is equal to an angle of 90° minus the Brewster angle, and that a multiple dielectric layer (2') comprising layers which have alternately low and high indices of refraction or higher and lower indices of refraction is applied to the output end face (12) or also the input end face (11) of the prism (1), where the index of refraction of a layer with a low index of refraction corresponds approximately to the index of refraction of the prism (1) and where the index of refraction of a layer which has a higher index of refraction is selected to be such that that a beam which is incident upon the input end face (11) of the prism at the Brewster angle and an outer layer which has a low index of refraction and is located on that side of the multiple layer remote from the prism, is incident on a layer with a higher index of refraction at an angle which corresponds to the Brewster angle determined by the indices of refraction of this higher refractive layer, and of the prism or of the lower refractive layer.

2. A polariser as claimed in Claim 1, characterised in that the prism (1) is a Dove prism.

3. A polariser as claimed in Claim 1 or 2, characterised in that at least the outer layer of the multiple layer (2') which is located on the side remote from the prism (1) is a layer with a lower index of refraction.

4. A polariser as claimed in one of the preceding Claims, characterised in that on the side (1) of the multiple layer (2') remote from the prism (1), a second prism (1') with total internal reflection and angular constancy under the Brewster condition is arranged, the input end face (11') of which adjoins the multiple layer (2') and the index of refraction of which corresponds approximately to that of the first prism (1).

5. A polariser as claimed in Claim 4, characterised in that the two prisms (1, 1') are both Dove prisms.

6. A polariser as claimed in one of the preceding Claims, characterised in that a prism (1' or also 1) is connected to the multiple layer (2') by a cement layer whose index of refraction corresponds approximately to that of the prism.

7. A polariser as claimed in one of the preceding Claims, characterised in that a refractive input end face (11) of the polariser via which a beam enters the polariser, or also a refractive output end face (12 or 12') of the polariser via which the beam passing through the polariser emerges from the polariser is covered by a radiation-impermeable mask (10, 10') provided with a window (101, 101') at the level of the incident and emergent beam respectively.

8. Use of a polariser as claimed in one of the preceding Claims for an optical insulator for nonreactive optical communications transmission via glass fibres or other optical waveguides.

# Revendications

1. Polariseur optique sans réflexion comportant un prisme pour un isolateur optique, le prisme étant agencé de telle sorte qu'un faisceau (2), qui tombe sous un angle d'incidence $(\theta_p)$, qui correspond à l'angle de Brewster, sur une surface d'entrée (11) du prisme (1) et se propage dans le prisme (1) en subissant des réflexions totales, rencontre une surface de sortie (12) du prisme (1), sous un angle $(\beta')$, qui est sensiblement égal à l'angle de réfraction $(\alpha_p)$ au niveau de la surface d'entrée (11) (prisme à réflexion totale et constance de l'angle dans les conditions de Brewster), caractérisé par le fait que la surface d'entrée et la surface de sortie (11, 12) sont inclinées par rapport à une surface de réflexion totale ou à plusieurs surfaces de réflexion totale parallèles (13, 13') du prisme (1), sous un angle respectif dont la valeur est égale à un angle de 90°, diminuée de l'angle de Brewster, et que sur la surface de sortie (12) ou également sur la surface d'entrée (11) du prisme (1) se trouve disposée une couche diélectrique multiple (2') avec des couches alternées qui sont moins réfringente et plus réfringente ou plus réfringente et moins réfringente, et dans laquelle l'indice de réfraction d'une couche moins réfringente correspond approximativement à l'indice de réfraction du prisme (1), et pour laquelle l'indice de réfraction d'une couche plus réfringente est choisi de sorte qu'un faisceau qui tombe sous l'angle de Brewster sur la surface d'entrée (11) du prisme ou sur une couche extérieure moins réfringente située sur la face de la couche multiple, tournée à l'opposé du prisme, tombe sur une couche plus réfringente sous un angle qui correspond à l'angle de Brewster déterminé par l'indice de réfraction de cette couche plus réfringente et par l'indice de réfraction du prisme ou de la couche moins réfringente.

2. Polariseur suivant la revendication 1, caractérisé par le fait que le prisme (1) est un prisme de Dove.

3. Polariseur suivant la revendication 1 ou 2, caractérisé par le fait qu'au moins la couche extérieure de la couche multiple (2'), qui est située sur la face tournée à l'opposé du prisme (1), est une couche réfringente.

4. Polariseur suivant l'une des revendications précédentes, caractérisé par le fait que sur la face (1), tournée à l'opposé du prisme (1) de la couche multiple (2'), se trouve disposé un second prisme (1') à réflexion totale fournissant une réflexion totale et une constance angulaire dans les conditions de Brewster et qui jouxte, par sa surface d'entrée (11'), la couche multiple (2') et dont l'indice de réfraction correspond approximativement à celui du premier prisme (1).

5. Polariseur suivant la revendication 4, caractérisé par le fait que les deux prismes (1, 1') sont respectivement des prismes de Dove.

6. Polariseur suivant l'une des revendications précédentes, caractérisé par le fait qu'un prisme (1' ou même 1) est relié à la couche multiple (2') par une couche de ciment dont l'indice de réfraction correspond approximativement à celui du prisme.

7. Polariseur suivant l'une des revendications précédentes, caractérisé par le fait qu'une surface d'entrée réfringente (11) du polariseur, par laquelle un faisceau pénètre dans le polariseur, ou même une surface de sortie réfringente (12 ou 12') du polariseur, par laquelle le faisceau se propageant dans le polariseur quitte ce dernier, est recouverte par un masque (10, 10') opaque au rayonnement et qui comporte une fenêtre (101, 101') à la hauteur du faisceau entrant ou sortant.

8. Utilisation d'un polariseur suivant l'une des revendications précédentes, pour un isolateur optique pour la transmission optique d'informations, sans rétroaction, par l'intermédiaire de fibres en verre ou d'autres guides optiques.

# FIG 1

# FIG 2